# EUROPÄISCHE PATENTSCHRIFT

(11) **EP 1 187 397 B1**
(45) Veröffentlichungstag und Bekanntmachung des Hinweises auf die Patenterteilung: **14.12.2005**
(21) Anmeldenummer: 01000437.2
(22) Anmeldetag: 07.09.2001
(51) Int. Cl.: H04L 12/28, H04L 12/56, H04L 12/26

(54) **Neukonfigurierung eines Adhoc-Netzwerks**
Reconfiguring an Ad Hoc network
Reconfiguration d'un réseau ad hoc

(30) Priorität: 11.09.2000 DE 10044994
(43) Veröffentlichungstag der Anmeldung: 13.03.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Habetha, Jörg, Philips Corporate Int.Prop.GmbH, 52064 Aachen (DE)
(74) Vertreter: Volmer, Georg

(56) Entgegenhaltungen:
- EP-A- 0 695 059
- US-A- 5 724 346
- HABETHA J ET AL: "Central controller handover procedure for ETSI-BRAN HiperLAN/2 Ad Hoc networks and clustering with quality of service guarantees" 1ST IEEE ANNUAL WORKSHOP ON MOBILE AD HOC NETWORKING & COMPUTING, 11. August 2000 (2000-08-11), Seiten 131-132, XP010511742

## Beschreibung

Die Erfindung bezieht sich auf ein drahtloses Adhoc-Netzwerk mit mehreren Terminals. Solche Adhoc-Netzwerke sind selbstorganisierend und können beispielsweise aus mehreren Sub-Netzwerken bestehen.

Aus dem Dokument "J. Habetha, AHettich, J. Peetz, Y. Du: Central Controller Handover Procedure for ETSI-BRAN HIPERLAN/2 Ad Hoc Networks and Clustering with Quality of Service Gurantees, 1^{st} IEEE Annual Workshop on Mobile Ad Hoc Networking & Computing, Aug. 11, 2000" ist ein Adhoc-Netzwerk mit mehreren Terminals bekannt. Wenigstens ein Terminal ist als Controller zur Steuerung des Adhoc-Netzwerkes vorgesehen. Unter bestimmten Bedingungen kann es erforderlich sein, dass ein anderes Terminal Controller wird. Zur Bestimmung eines neuen Controllers werden u.a. die LDV- und die ICT-Methode vorgeschlagen. Bei der LDV-Methode (LDV = Lowest Distance Value) berechnet jedes Terminal die Summe der Entfernungen zu seinen jeweiligen benachbarten Terminals und teilt diese Summe durch die Anzahl der benachbarten Terminals. Das Terminal mit dem geringsten Wert wird der neue Controller. Bei der ICT-Methode (ICT = Highest In-Cluster Traffic) wird dasjenige Terminal als Controller ausgesucht, welches den höchsten Verkehr mit den benachbarten Terminals hat.

Aus dem Dokument EP 0695059 A1 ist ein Netzwerk bekannt, welches eine fest installierte Infrastruktur mit Access Points enthält. Diese Access Points dienen als Controller zur Steuerung. Jeder Controller verfügt dabei über einen technisch bedingten, vorbestimmten Übertragungsbereich. Innerhalb dieses Bereichs ist drahtlosen, registrierten Terminals ein Datenaustausch mit den Access Points möglich. In vorbestimmten Zeitintervallen senden die Terminals einen topologischen Rundruf an jeden erreichbaren Netzwerkteilnehmer aus. Dabei wird eine Matrix ausgesandt, welche die jeweilige Netzwerkadresse und eine Liste mit allen Netzwerkadressen die vom Terminal bisher empfangen wurden, beinhaltet. Mittels dieser Daten kann der Controller den räumlichen Aufbau des Netzwerkes konstruieren und regelmäßig aktualisieren. Befindet sich ein Terminal im Übertragungsbereich von zwei Access Points, werden die Netzwerkadressen verglichen, wobei der Access Point, der die kürzere Netzwerkadresse vergeben hat, die Steuerung übernimmt. Die andere Adresse wird gelöscht, demzufolge wird die Verbindung zum anderen Access Point annulliert. Dadurch ist ein Steuerungswechsel ausschließlich zwischen den Access Points möglich. Es kann auch die Empfangsfeldstärke zur Messung, ob ein Terminal in Übertragungsreichweite ist, herangezogen werden. Eine genaure Beschreibung eines möglichen Verfahrens ist in EP 0695059 A1 jedoch nicht angegeben.

Der Erfindung liegt die Aufgabe zugrunde, ein Netzwerk zu schaffen, welches Maßnahmen zur einfachen Findung eines Terminals mit einer Steuerungsfunktion (Controller) aufweist.

Die Aufgabe wird durch ein Netzwerk der eingangs genannten Art durch die Merkmale des Anspruchs 1 gelöst.

Erfindungsgemäß werden in einem oder mehreren Terminals des Netzwerks gemessene Verkehrsverhältnisse in vorgegebenen Abständen abgespeichert. Das kann beispielsweise die Messung der Empfangsfeldstärke oder die Messung des Nutzdatenverkehrs eines Terminals zu einem anderen Terminal sein. Es ist auch möglich, dass wenigstens das als Controller bezeichnete Terminal mit der Netzwerk-Steuerungsfunktion zur Speicherung der Verkehrsverhältnisse zwischen wenigstens einem Teil der Terminals in Form einer Matrix vorgesehen ist. Ein Wechsel der Netzwerk-Steuerungsfunktion von einem Terminal, d.h. der Wechsel der Controllerfunktion, kann erforderlich sein, wenn dies anhand der gespeicherten Verkehrsverhältnisse oder der Matrix ermittelt wird. Diese Entscheidung kann der bisherige Controller oder jedes Terminal unter der Voraussetzung treffen, das an diese die gespeicherte Matrix verteilt worden ist.

Ein Kriterium für den Controllerwechsel kann ein Wert sein, der sich aus der Summe aller Empfangsfeldstärken eines Terminals zu seinen benachbarten Terminals dividiert durch die Anzahl der benachbarten Terminals ergibt. Das Terminal mit dem geringsten Wert übernimmt dann die Controllerfunktion. Ein weiteres Kriterium kann ein Wert sein, der sich aus der Summe des Nutzdatenverkehrs eines Terminals mit den benachbarten Terminals ergibt. Das Terminal mit dem höchsten Wert wird dann Controller.

Das Netzwerk kann auch mehrere Sub-Netzwerke mit jeweils einem als Controller bezeichneten die jeweilige Netzwerk-Steuerungsfunktion des Sub-Netzwerks ausübenden Terminal enthalten. Diese Sub-Netzwerke tauschen über Brücken-Terminals Nachrichten und Daten aus. Wenigstens ein Terminal in einem Sub-Netzwerk dient zur Speicherung der eigenen Verkehrsverhältnisse und der Verkehrsverhältnisse der anderen Sub-Netzwerke. Bei einer Änderung der Verkehrsverhältnisse können die Sub-Netzwerke andere Controller und damit ggf. auch andere zugeordnete Terminals erhalten.

Die Daten, welche im Netzwerk übertragen werden, können z.B. nach einem Paketübertragungsverfahren erzeugt sein. Die Pakete können insgesamt oder als Teilpakete nach Hinzufügung weiterer Informationen über das drahtlose Medium übertragen werden. Unter einer drahtlosen Übertragung ist eine Funk-, Infrarot-, Ultraschallübertragung etc. zu verstehen. Als Paketübertragungsverfahren kann beispielsweise der asynchrone Transtermodus (ATM) angewendet werden, der Pakete fester Länge erzeugt, die Zellen genannt werden.

Ausfürunhrungbeispiele der Erfindung werden nachstehend anhand der Figuren näher erläutert. Es zeigen:
- Fig. 1: ein Adhoc-Netzwerk mit drei Sub-Netzwerken, die jeweils zur Funkübertragung vorgesehene Terminals enthalten,
- Fig. 2: ein Terminal des lokalen Netzwerks nach Fig. 1,
- Fig. 3: eine Funkvorrichtung des Terminals nach Fig. 2,
- Fig. 4: eine Ausführung eines zur Verbindung von zwei Sub-Netzwerken vorgesehenen Brücken-Terminals,
- Fig. 5: MAC-Rahmen von zwei Sub-Netzwerken und die MAC-Rahmenstruktur eines Brückenterminals und
- Fig. 6: eine Matrix mit den Empfangefeldstärken zwischen verschiedenen Terminals.

Das im folgenden dargestellte Ausführungsbeispiel bezieht sich auf Adhoc-Netzwerke, die im Gegensatz zu traditionellen Netztwerken selbstorganisierend sind Jedes Terminal in einem solchen Adhoc-Netzwerk kann einen Zugang zu einem Fest-Netzwerk ermöglichen und ist sofort einsetzbar. Ein Adhoc-Netzwerk ist dadurch gekennzeichnet, dass die Struktur und die Anzahl von Teilnehmern innerhalb vorgegebener Grenzwerte nicht festgelegt ist. Beispielsweise kann eine Kommunikationsvorrichtung eines Teilnehmers aus dem Netzwerk genommen oder eingebunden werden. Im Gegensatz zu traditionellen Mobilfunknetzen ist ein Ajhoc-Netzwerk nicht auf eine fest installierte Infrastruktur angewiesen.

Die Größe der Fläche des Ajhoc-Netzwerks ist in der Regel sehr viel größer als der Übertragungsbereich von einem Terminal. Eine Kommunikation zwischen zwei Terminals kann daher die Einschaltung weiterer Terminals erforderlich machen, damit diese Nachrichten oder Daten zwischen den beiden kommunizierenden Terminals übertragen können. Solche Adhoc-Netzwerke, bei denen eine Weiterleitung von Nachrichten und Daten über ein Terminal notwendig ist, werden als Multihop-Adhoc-Netzwerke bezeichnet. Eine mögliche Organisation eines Adhoc-Netzwerkes besteht darin, regelmäßig Sub-Netzwerke oder Cluster zu bilden. Ein Sub-Netzwerk des Adhoc-Netzwerks kann beispielsweise durch über Funkstrecken verbundene Terminals von um einen Tisch sitzenden Teilnehmern gebildet werden. Solche Terminals können z.B. Kommunikationvorrichtungen zum drahtlosen Austausch von Dokumenten, Bildern usw. sein.

Es lassen sich zwei Typen von Adhoc-Netzwerken angeben. Das sind dezentralisierte und zentralisierte Adhoc-Netzwerke. In einem dezentralisierten Adhoc-Netzwerk ist die Kommunikation zwischen den Terminals dezentralisiert, d.h. jedes Terminal kann mit jedem anderen Terminal unter der Voraussetzung direkt kommunizieren, dass die Terminals jeweils in dem Übertragungsbereich des anderen Terminals liegen. Der Vorteil eines dezentralisierten Adhoc-Netzwerks ist dessen Einfachheit und Robustheit gegen Fehler. Bei einem zentralisierten Adhoc-Netzwerk werden bestimmte Funktionen, wie z.B. die Funktion des Mehrfachzugriffs eines Terminals zum Funkübertragungsmedium (Medium Access Control = MAC) von einem bestimmten Terminal pro Sub-Netzwerk gesteuert. Dieses Terminal wird als zentrales Terminal oder zentraler Controller (Central Controller = CC) bezeichnet. Diese Funktionen müssen nicht immer von demselben Terminal ausgerührt werden, sondern können von einem als zentraler Controller arbeitenden Terminal zu einem anderen dann als zentraler Controller agierenden Terminal übergeben werden. Der Vorteil eines zentralen Adhoc-Netzwerks ist, dass in diesem auf einfache Art eine Vereinbarung über die Dienstgüte (Quality of Service = QoS) möglich ist. Ein Beispiel für ein zentralisiertes Adhoc-Netzwerk ist ein Netzwerk, welches nach der HiperLAN/2 Home Environment Extension (HEE) organisiert ist (vgl. J. Habetha, AHettich J. Peetz, Y. Du, "Central Controller Handover Procedure for ETSI-BRAN IIIPERLAN/2 Ad Hoc Nerworks and Clustering with Quality of Service Gurantees", 1^{st} IEEE Annual Workshop on Mobile Ad Hoc Networking & Computing, , Aug. 11, 2000).

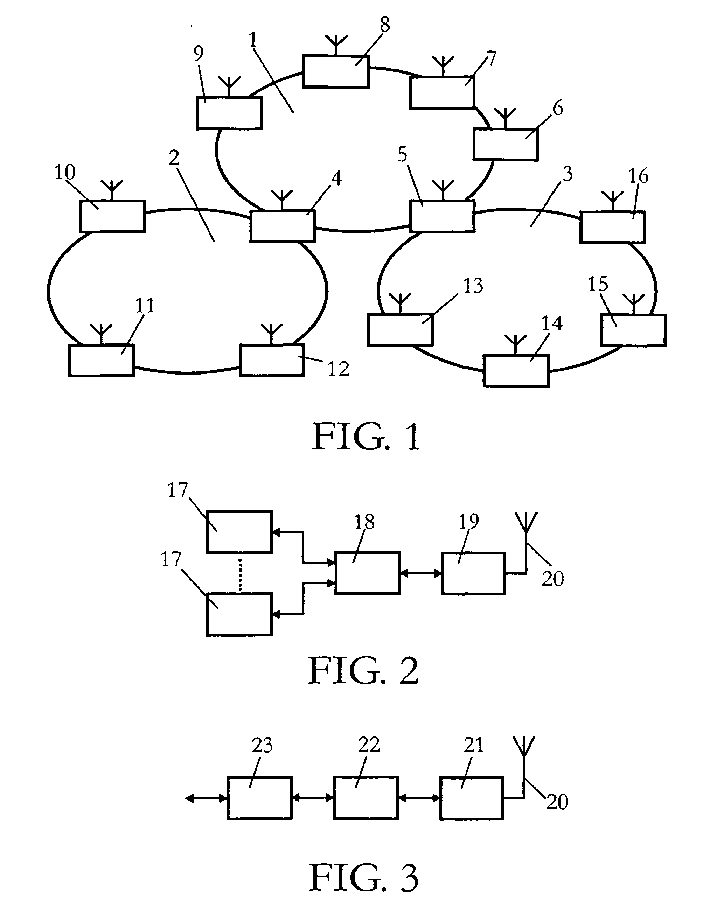

In Fig. 1 ist ein Ausführungsbeispiel eines Adhoc-Netzwerks mit drei Sub-Netzwerken 1 bis 3 dargestellt, die jeweils mehrere Terminals 4 bis 16 enthalten. Bestandteil des Sub-Netzwerks 1 sind die Terminals 4 bis 9, des Sub-Netzwerks 2 die Terminals 4 und 10 bis 12 und des Sub-Netzwerks 3 die Terminals 5 und 13 bis 16. In einem Sub-Netzwerk tauschen die jeweils zu einem Sub-Netzwerk gehörenden Terminals Daten über Funkstrecken aus. Die in Fig 1 eingezeichneten Ellipsen geben den Funkbereich eines Sub-Netzwerks (1 bis 3) an, in dem zwischen den zu dem Sub-Netzwerk gehörenden Terminals eine weitgehend problemlose Funkübertragung möglich ist.

Die Terminals 4 und 5 werden Brücken-Terminals genannt, weil diese einen Datenaustausch zwischen zwei Sub-Netzwerken 1 und 2 bzw. 1 und 3 ermöglichen. Das Brücken-Terminal 4 ist für den Datenverkehr zwischen den Sub-Netzwerken 1 und 2 und das Brücken-Terminal 5 für den Datenverkehr zwischen den Sub-Netzwerken 1 und 3 zuständig.

Ein Terminal 4 bis 16 des lokalen Netzwerks nach Fig 1 kann eine mobile oder feste Kommunikationsvorrichtung sein und enthält bespielsweise mindestens eine Station 17, eine Verbindungskontrollvorrichtung 18 und eine Funkvorrichtung 19 mit Antenne 20, wie dies Fig 2 zeigt. Eine Station 17 kann beispielsweise ein tragbarer Computer, Fernsprecher usw. sein.

Eine Funkvorrichtung 19 der Terminals 6 bis 16 enthält, wie Fig. 3 zeigt, außer der Antenne 20 eine Hochfrequenzschaltung 21, ein Modem 22 und eine Protokollvorrichtung 23. Die Protokollvorrichtung 23 bildet aus dem von der Verbindungskontrollvorrichtung 18 empfangenen Datenstrom Paketeinheiten. Eine Paketeinheit enthält Teile des Datenstroms und zusätzliche von der Protokollvorrichtung 23 gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff eines Terminals zum Funkübertragungsmedium und die LLC-Schicht führt eine Fluß- und Fehlerkontrolle durch.

Wie oben erwähnt, ist in einem Sub-Netzwerk 1 bis 3 eines zentralisierten Adhoc-Netztwerks ein bestimmtes Terminal zuständig für die Kontroll- und Managementfunktionen und wird als zentraler Controller bezeichnet. Der Controller arbeitet außerdem als normales Terminal im zugehörigen Sub-Netzwerk Der Controller ist z.B. für die Registrierung von Terminals, die den Betrieb im Sub-Netzwerk aufnehmen, für den Verbindungsaufbau zwischen wenigstens zwei Terminals im Funkübertragungsmedium, für die Resourcenverwaltung und für die Zugriffssteuerung im Funkübertragungsmedium zuständig So erhält beispielsweise ein Terminal eines Sub-Netzwerks nach der Registrierung und nach der Anmeldung eines Übertragungswunsches vom Controller Übertragungskapazität für Daten (Paketeinheiten) zugewiesen.

In dem Adhoc-Netzwerk können die Daten zwischen den Terminals nach einem TDMA-, FDMA- oder CDMA-Verfahren (TDMA = Time Division Multiplex Access, FDMA = Frequency Division Multiplex Acces, CDMA = Code Division Multiplex Access) ausgetauscht werden. Die Verfahren können auch kombiniert werden. Jedem Sub-Netzwerk 1 bis 3 des lokalen Netzwerks sind eine Anzahl von bestimmten Kanälen zugeordnet, die als Kanalbündel bezeichnet werden. Ein Kanal ist durch einen Frequenzbereich, einen Zeitbereich und z.B. beim CDMA-Verfahren durch einen Spreizungscode bestimmt. Beispielsweise kann jedem Sub- Netzwerk 1 bis 3 zum Datenaustausch ein bestimmter, jeweils unterschiedlicher Frequenzbereich mit einer Trägerfrequenz fᵢ zur Verfügung stehen. In einem solchen Frequenzbereich können beispielweise Daten mittels des TDMA-Verfahrens übertragen werden. Dabei kann dem Sub-Netzwerk 1 die Trägerfrequenz f₁, dem Sub-Netzverk 2 die Trägerfrequenz f₂ und dem Sub-Netzwerk 3 die Trägerfrequenz f₃ zugewiesen werden. Das Brücken-Terminal 4 arbeitet einerseits, um mit den anderen Terminals des Sub-Netzwerks 1 einen Datenaustausch durchführen zu können, mit der Trägerfrequenz f₁ und andererseits, um mit den anderen Terminals des Sub-Netzwerks 2 einen Datenaustausch durchführen zu können, mit der Trägerfrequenz f₂. Das zweite im lokalen Netzwerk enthaltene Brücken-Terminal 5, welches Daten zwischen den Sub-Netzwerken 1 und 3 überträgt, arbeitet mit den Trägerfrequenzen f₁ und f₃.

Wie oben erwähnt, hat der zentrale Controller beispielsweise die Funktion der Zugriffssteuerung. Das bedeutet, dass der zentrale Controller für die Bildung von Rahmen der MAC-Schicht (MAC-Rahmen) verantwortlich ist. Hierbei wird das TDMA-Verfahren angewendet. Ein solcher MAC-Rahmen weist verschiedene Kanäle für Steuerinformationen und Nutzdaten auf.

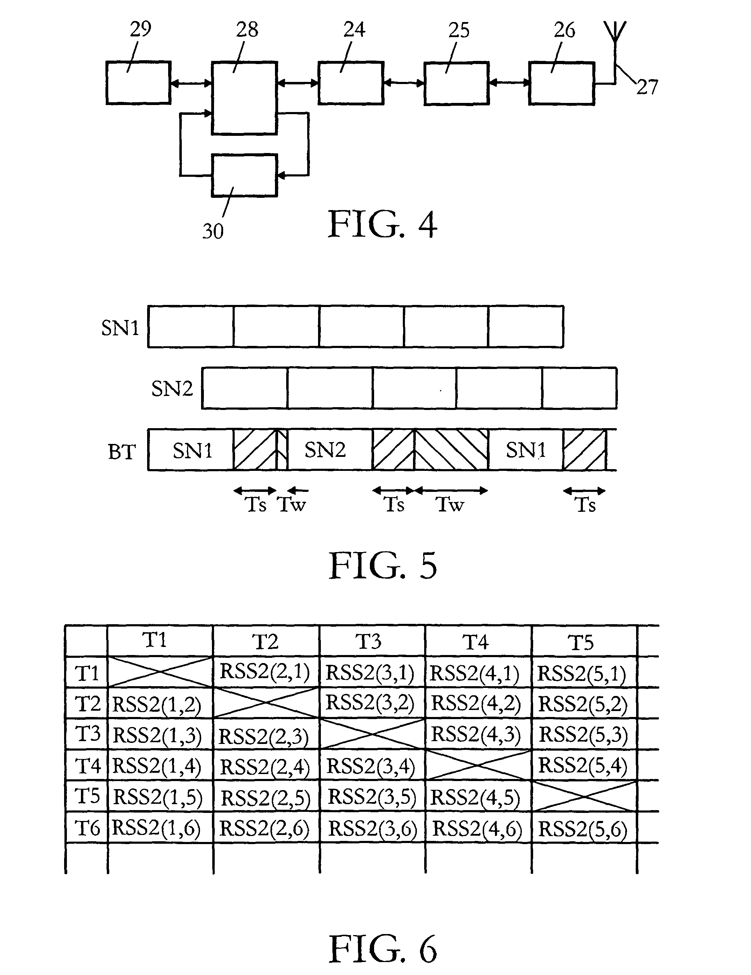

Ein Blockschaltbild eines Ausführungsbeispiels eines Brücken-Terminals ist in Fig 4 dargestellt. Die Funkschaltvorrichtung dieses Brücken-Terminals enthält jeweils eine Protokollvorrichtung 24, ein Modem 25 und eine Hochfrequenzschaltung 26 mit Antenne 27. Mit der Protokollvorrichtung 24 ist eine Funkschaltvorrichtung 28 verbunden, die des weiteren an eine Verbindungskontrollvorrichtung 29 und einer Zwischenspeichervorrichtung 30 angeschlossen ist. Die Zwischenspeichervorrichtung 30 enthält in dieser Ausführungsform ein Speicherelement und dient zur Zwischenspeicherung von Daten und ist als FIFO-Baustein realisiert (First In First Out), d.h. die Daten werden in der Reihenfolge aus der Zwischenspeichervorrichtung 30 gelesen, in der sie eingeschrieben worden sind Das in Fig. 4 dargestellte Terminal kann ebenfalls als normales Terminal arbeiten. An die Verbindungskontrollvorrichtung 29 angeschlossene Stationen, die nicht in Fig 4 eingezeichnet sind, liefern dann über die Verbindungskontrollvorrichtung 29 Daten zur Funkschaltvorrichtung 28.

Das Brücken-Terminal nach der Fig. 4 ist abwechselnd mit einem ersten und zweiten Sub-Netzwerk synchronisiert. Unter Synchronisation wird der gesamte Prozess der Einbindung eines Terminals im Sub-Netzwerks bis zum Austausch von Daten verstanden. Wenn das Brücken-Terminal mit dem ersten Sub-Netzwerk synchronisiert ist, kann es Daten mit allen Terminals und mit dem Controller dieses ersten Sub-Netwerks austauchen Werden von der Verbindungskontrollvorrichtung 29 Daten an die Funkschaltvorrichtung 28 geliefert, deren Bestimmungsort ein Terminal oder der Controller des ersten Sub-Netzwerks oder ein Terminal oder Controller eines anderen Sub-Netzwerks ist, die über das erste Sub-Netzwerk zu erreichen sind, leitet die Funkschaltvorrichtung diese Daten direkt an die Protokollvorrichtung 24 weiter. In der Protokollvorrichtung 24 werden die Daten solange zwischengespeichert, bis der vom Controller bestimmte Zeitabschnitt für die Übertragung erreicht ist. Wenn die von der Verbindungskontrollvorrichtung 29 ausgegebenen Daten zu einem Terminal oder dem Controller des zweiten Sub-Netzwerks oder zu einem anderen über das zweite Sub-Netzwerk zu erreichenden Sub-Netzwerk gesendet werden soll, muss die Funkübertragung bis zu dem Zeitabschnitt verzögert werden, in dem das Brücken-Terminal mit dem zweiten Sub-Netzwerk synchronisiert ist. Daher leitet die Funkschaltvorrichtung die Daten, deren Bestimmungsort im zweiten Sub-Netzwerk liegt oder deren Bestimmungsort über das zweite Sub-Netwerk zu erreichen ist, zu der Zwischenspeichervorrichtung 30, welche die Daten solange zwischenspeichert, bis das Brücken-Terminal mit dem zweiten Sub-Netzwerk synchronisiert ist.

Wenn Daten von einem Terminal oder dem Controller des ersten Sub-Netzwerk vom Brücken-Terminal empfangen werden und deren Bestimmungsort ein Terminal oder der Controller des zweiten Sub-Netzwerks oder ein Terminal oder Controller eines anderen über das zweite Sub- Netzwerk zu erreichenden Sub-Netzwerks ist, werden diese Daten ebenfalls bis zur Synchronisation mit dem zweiten Sub-Netzwerk in der Zwischenspeichervorrichtung 30 abgelegt. Daten, deren Bestimmungsort eine Station des Brücken-Terminals ist, werden direkt über die Funkschaltvorrichtung 28 zur Verbindungskontrollvorrichtung 29 gegeben, die dann die empfangenen Daten zu der gewünschten Station leitet. Daten, deren Bestimmungsort weder eine Station des Brücken-Terminals noch ein Terminal oder Controller des zweiten Sub-Netzwerks ist, beipielsweise zu einem weiteren Brücken-Terminal gesendet.

Nach dem Synchronisationswechsel des Brücken-Terminals vom ersten zum zweiten Sub-Netzwerk werden die in der Zwischenspeichervorrichtung 30 befindlichen Daten in der Einschreibreihenfolge wieder aus der Zwischenspeichervordchtung 30 gelesen. Anschließend können während der Dauer der Synchronisation des Brücken-Terminals mit dem zweiten Sub-Netzwerk alle Daten, deren Bestimmungsort ein Terminal oder der Controller des zweiten Sub-Netzwerks oder ein anderes über das zweite Sub-Netzwerk zu erreichende Sub-Netzwerk ist, sofort von der Funkschaltvorrichtung 28 zur Protokollvorrichtung 24 weitergegeben und nur die Daten, deren Bestimmungsort ein Terminal oder der Controller des ersten Sub-Netzwerks oder ein anderes über das erste Sub-Netzwerk zu erreichende Sub-Netzwerk ist, in der Zwischenspeichervorrichtung 30 gespeichert werden.

Die MAC-Rahmen von zwei Sub-Netzwerken SN1 und SN2 sind in der Regel nicht synchronisiert. Daher ist ein Brücken-Terminal BT mit einem Sub-Netzwerk SN1 oder SN2 nicht nur während einer Umschaltzeit Ts sondern auch während einer Wartezeit Tw nicht verbunden. Dies lässt sich aus Fig. 5 entnehmen, welche eine Folge von MAC-Rahmen der Sub-Netzwerke SN1 und SN2 und die MAC-Rahmenstruktur des Brücken-Terminals BT zeigt. Die Umschaltzeit Ts ist diejenige Zeit, die erforderlich ist, damit das Brücken-Terminal sich mit einem Sub-Netzwerk synchronisieren kann. Die Wartezeit Tw gibt die Zeit zwischen dem Ende der Synchronisation mit dem Sub-Netzwerk und dem Beginn eines neuen MAC-Rahmens dieses Sub-Netzwerks.

Unter der Annahme, dass das Brücken-Terminal BT nur jeweils für die Dauer eines MAC-Rahmens mit einem Sub-Netzwerk SN1 oder SN2 verbunden ist, weist das Brücken-Terminal BT nur eine Kanalkapazität von 1/4 der verfügbaren Kanalkapazität eines Sub-Netzwerks auf. In dem anderen extremen Fall, dass das Brückenterminal BT für eine längere Zeit mit einem Sub-Netzwerk verbunden ist, beträgt die Kanalkapazität die Hälfte der verfügbaren Kanalkapazität eines Sub-Netzwerks.

Wie oben beschrieben, enthält jedes Sub-Netzwerk einen zentralen Controller zur Steuerung des zugeordneten Sub-Netzwerks. Bei der Inbetriebnahme eines Sub-Netzwerks muss sichergestellt werden, dass nur ein Terminal die Funktion des zentralen Controllers übernimmt. Es sei vorausgesetzt, dass nicht jedes Terminal die Funktion des zentralen Controllers übernehmen kann. Es wird zur Bestimmung eines zentralen Controllers beispielsweise so vorgegangen, dass jedes Terminal, welches eine Controller-Funktion übernehmen kann, prüft, ob in ihrem Empfangsbereich ein anderes Terminal ist, welches die Controller-Funktion ausführen kann. Ist dies der Fall, stellt das detektierende Terminal fest, dass es nicht Controller wird. Führen alle anderen Terminals ebenfalls diese Überprüfungen durch, bleibt am Ende ein Terminal über, welches kein anderes Terminal mit einer Controller-Funktion detektiert und somit die Controller-Funktion übernimmt.

Es kann vorkommen, dass ein Sub-Netzwerk neu konfiguriert werden muss. Es können folgende Gründe vorliegen:
- Abschaltung des zentralen Controllers,
- ungenügende Leistungsbedingungen des zentralen Controllers,
- schlechte Verbindungen von einem oder mehreren Terminals,
- ungenügende Kapazitätsbedingungen in einem oder mehreren Sub-Netzwerken,
- neue einzubindende oder abgeschaltete Terminals in dem Sub-Netzwerk und
- Wegbewegen eines Terminals aus dem Sub-Netzwerk.

Zur Rekonfigurierung eines Sub-Netzwerks kann eine Entfernungs-Matrix (distance matrix) verwendet werden, welche über die Messung der Empfangsfeldstärke RSS2 (Recieved signal strength) direkt die Entfernung zwischen zwei Terminals im freien Raum angibt. Ein Beispiel einer solchen Entfernungs-Matrix zeigt Fig. 6. In der Entfernungs-Matrix worden die Terminals mit T1 bis T6 und die Empfangsfeldstärken mit RSS2(x,y) bezeichnet. RSS2(x,y) bedeutet die wn dem Terminal Tx gemessene Feldstärke des Terminals Ty.

Zur Ermittlung eines neuen zentralen Controllers können verschiedene Kriterien angewendet werden. Ein Kriterium ist das folgende: Jedes Terminal berechnet die Summe aller Empfangsfeldstärken (RSS2(x,y)) zu seinen direkten Nachbarn und teilt diese Summe durch die Anzahl der direkten Nachbarn. Das Terminal mit dem geringsten berechneten Wert wird dann der neue Controller. Diese Methode wird im folgenden als LDV (lowest distance value) bezeichnet.

Den geringsten Entfernungswert jedes Terminals in der Umgebung des bisherigen zentralen Controllers kann von diesem bisherigen Controller selbst ermittelt werden. Der bisherige Controller kennt selbst alle Empfangsfeldstärken (RSS2) der Terminals in seinem bisherigen Sub-Netzwerk. Diese sind während des Betriebes von den einzelnen Terminals seines Sub-NetzMerks ermittelt und dem bisherigen Controller mitgeteilt worden. Ferner kennt der bisherige Controller auch die Entfernungs-Matrizen seiner benachbarten oder auch weiter entfernten Sub-Netzwerke. Diese sind dem bisherigen Controller von den Controllern der anderen Sub-Netzwerke regelmäßig mitgeteilt worden. Ebenso hat der bisherige Controller seine Entfernungs-Matrix den Controllern der anderen Sub-NetzMerke übertragen. Hierdurch kennt der bisherige Controller nicht nur die Empfangsfddstärken seiner zugeordneten Terminals (die Terminals in seinem Sub-Netzwerk), sondern auch die von anderen Sub-Netzwerken. Anhand seiner eigenen Entfernungs-Matrix und der Entfernungs-Matrix der anderen Sub-Netzwerke kann der bisherige Controller dann berechnen, welches Terminal den geringsten Entfemungswert (LDV) aufweist. Das kann auch der bisherige Controller sein. Falls der neue Controller nicht der bisherige Controller ist, muss noch ein Austausch von Steuerungsinformationen stattfinden.

Es kann auch vorgesehen werden, dass der bisherige Controller die Entfernungs-Matrizen im Verteil-Modus (Broadcast) an die Terminals seines Sub-Nebwerkes sendet und diese selbstständig eine Entscheidung treffen, wer zentraler Controller wird.

Es ist auch möglich, dass jedes Terminal periodisch im Verteil-Modus (Broadcast) seinen eigenen durchschnittlichen Empfangsfeldstärken (RSS2) versendet, die dann von den Nachbarterminals empfangen werden. Jedes Terminal entscheidet dann selbstständig, ob es sich zum zentralen Controller macht. Hierbei kann folgender Ablauf vorgesehen werden:

Ein Terminal sammelt kontinuierlich die durchschnittlichen, von einem benachbarten Terminal gesendeten Empfangsfeldstärken (RSS2). Die empfangenen Empfangsfeldstärken werden in einem Terminal gespeichert und die Summe der Empfangsfeldstärken geteilt durch Anzahl der benachbarten Terminals berechnet. Nach einer längeren Zeit sollte eine gespeicherte Empfangsfeldstärke und damit der berechnete Wert eines Terminals gelöscht werden, wenn von diesem über den angegebenen Zeitraum nichts mehr empfangen wurde. Damit soll vermieden werden, dass nicht Terminals betrachtet werden, die schon lange nicht mehr aktiv sind Das Terminal macht sich dann zum zentralen Controller, wenn der eigene berechnete Wert kleiner ist als der kleinste Wert der anderen Terminals. Der neue zentrale Controller muss danach alle erforderlichen Steuerinformationen von dem bisherigen Controller erhalten.

Ein weiteres Kriterium zur Ermittlung eines zentralen Controllers wird als ICT-Methode (Highest In-Cluster Traffic) bezeichnet. Hierbei wird die Summe des Nutzdatenverkehrs, den ein Terminal mit allen benachbarten Terminals hat berechnet. Das Gerät mit dem höchsten Nutzdatenverkehr wird dann zentraler Controller. Es ist dann garantiert ist, dass ein großer Teil des Nutzdatenverkehrs auf jeden Fall innerhalb des Sub- Netzwerkes abgewickelt wird und somit das die Übertragung von Daten über wenigstens ein Brücken-Terminal verringert wird. Bei dieser Methode können dieselben Abläufe - wie oben zur LDV-Methode angegeben - zur Ermittlung eines zentralen Controllers angewendet werden. Erforderlich ist auch hier die Bildung einer Matrix, die den Nutzdatenverkehr der jewilligen Terminals untereinander angibt und Verkehrs-Matrix genannt wird. In einem Kreuzunggpunkt der Matrix steht dann ein Wert, der den Nutzdatenverkehr von einem zum anderen Terminal angibt.

Werden die oben genannten Werte zur Auswahl eines neuen Controllers vom bisherigen Controller periodisch berechnet, wird sich dabei häufig ein Terminal finden, dessen Wert besser als der Wert des bisherigen Controllers ist. Würde jeweils streng nach dem Entscheidungskriterium vorgegangen, müßte der bisherige Controller die Controller-Funktion an das besser geeignete Terminal abgeben. Dies würde (je nach der Häufigkeit der Wertberechnung) zu häufigen Neukonfigurationen des Netzwerkes führen. Da eine Rekonfiguration das Netzwerk durch eine notwendige Signallisierung belastet, ist eine häufige Neukonfiguration möglichst zu vermeiden. Vor der Neukonfigurierung eines oder mehrerer Sub-Netzwerke sollte daher zuerst getestet werden, ob überhaupt eine Veränderung der alten Konfiguration mit dem bisherigen Controller erforderlich ist. Nur wenn dies der Fall ist, sollte nach dem jeweiligen Kriterium neu konfiguriert werden.

Ferner kann eine Neukonfigurierung eines oder mehrerer Sub-Netzwerke dazu führen, dass diese nicht mehr durch ein Brücken-Terminal verbunden sind. Daher prüft jedes Terminal in regelmäßigen Abständen, ob es Daten oder Nachrichten empfängt, die nicht von dem zugeordneten Sub-Netzwerk stammen können. Das können mit einer anderen Trägerfrequenz übertragene Nachrichten oder Daten sein. Wenn ein Terminal eine solche andere Nachricht empfangen hat, sendet es eine Anfrage an den Controller, ob ein dem Sub-Netzwerk zugeordnetes Brücken-Terminal vorhanden ist, welches Nachrichten oder Daten von diesem Sub-Netzwerk verarbeiten kann. Wenn dies nicht der Fall ist, macht das Terminal ein neues Sub-Netzwerk auf, das nun die beiden zuvor nicht verbundenen anderen Sub-Netzwerke verbindet. Das Terminal, dessen Nachrichten empfangen wurden, wird durch den Controller des neuen Sub-Netzwerks aufgefordert, ein Brücken-Terminal zwischen dessen Sub-Netzwerk und dem neu eingerichteten Sub-Netzwerk zu werden. Falls der Fall auftritt, dass mehrere Terminals diese Anfrage an den Controller gesendet haben, wird einer von diesen Terminals von dem Controller als neuer zusätzlicher Controller bestimmt.

## Patentansprüche

1. Drahtloses Adhoc-Netzwerk mit mehreren Terminals,
von denen wenigstens ein Terminal anhand gespeicherter Verkehrsverhältnisse zur Feststellung vorgesehen ist, ob ein Wechsel der Netzwerk-Steuerungsfunktion von einem Terminal zu einem anderen Terminal erforderlich ist,
**dadurch gekennzeichnet,**
**dass** wenigstens ein Terminal zur Speicherung von in vorgegebenen Abständen gemessenen Verkehrsverhältnissen zwischen wenigstens einem Teil der Terminals vorgesehen ist, wobei die Messung der Verkehrsverhältnisse zwischen zwei Terminals entweder die Messung der Empfangsfeldstärke oder die Messung des Nutzdatenverkehrs zwischen zwei Terminals bedeutet,
**dass** wenigstens das als Controller bezeichnete Terminal mit der Netzwerk-Steuerungsfunktion zur Speicherung der Verkehrsverhältnisse zwischen wenigstens einem Teil der Terminals in Form einer Matrix vorgesehen ist,
**dass** der Controller zur Verteilung der gespeicherten Matrix an alle Terminals vorgesehen ist und
**dass** ein Terminal anhand der Matrix zur Feststellung vorgesehen ist, ob es die Controllerfunktion übernehmen soll.

2. Drahtloses Adhoc-Netzwerk nach Anspruch 1,
**dadurch gekennzeichnet,**
**dass** ein Terminal zur Berechnung eines Wertes vorgesehen ist, der sich aus der Summe aller Empfangsfeldstärken eines Terminals zu seinen benachbarten Terminals dividiert durch die Anzahl der benachbarten Terminals zusammensetzt, und
**dass** Terminal mit dem geringsten Wert zur Übernahme der Netzwerk-Steuerungsfunktion vorgesehen ist.

3. Drahtloses Adhoc-Netzwerk nach Anspruch 1,
**dadurch gekennzeichnet,**
**dass** ein Terminal zur Berechnung eines Wertes vorgesehen ist, der sich aus der Summe des Nutzdatenverkehrs eines Terminals mit den benachbarten Terminals zusammensetzt, und dass Terminal mit dem höchsten Wert zur Übernahme der Netzwerk-Steuerungsfunktion vorgesehen ist

4. Drahtloses Adhoc-Netzwerk nach Anspruch 1,
**dadurch gekennzeichnet,**
**dass** mehrere Sub-Netzwerke mit jeweils einem als Controller bezeichneten die jeweilige Netzwerk-Steuerungsfunktion des Sub-Netzwerks ausübenden Terminal enthalten sind, dass die Sub-Netzwerke über Brücken-Terminals zum Austausch von Nachrichten und Daten zwischen den Sub-Netzwerken vorgesehen sind,
**dass** wenigstens ein Terminal in einem Sub-Netzwerk zur Speicherung der eigenen Verkehrsverhältnisse und der Verkehrsverhältnisse der anderen Sub-Netzwerke vorgesehen ist und
**dass** die in einem Terminal gespeicherten Verkehrsverhältnisse jedes Sub-Netzwerks zur Feststellung vorgesehen ist, ob ein Wechsel der Netzwerk-Steuerungsfunktion von einem Terminal zu einem anderen Terminal erforderlich ist

5. Drahtloses Adhoc Netzwerk nach Anspruch 1,
**dadurch gekennzeichnet,**
**dass** nach einem Wechsel der Netzwerk-Steuerungsfunktion von einem Terminal zu einem anderen Terminal das bisherige Terminal mit der Netzwerk-Steuerungsfunktion zur Übertragung von Steuerungsinformationen zu dem neuen Terminal mit der Netzwerk-Steuerungsfunktion vorgesehen ist.

## Claims

1. A wireless ad hoc network comprising a plurality of terminals, of which at least one terminal is provided on account of stored traffic ratios for establishing whether a change of the network control function from one terminal to another is necessary, **characterized in that** at least one terminal is provided for storing traffic ratios between at least part of the terminals measured at predefined intervals, where the measurement of the traffic ratios between two terminals is understood to mean either the measurement of the received field strength or the measurement of the traffic of useful data between two terminals, **in that** at least the terminal referred to as controller having the function of network controller is provided for storing the traffic ratios between at least part of the terminals in the form of a matrix, **in that** the controller is provided for distributing the stored matrix to all terminals and **in that** a terminal, based on the matrix, is provided for establishing whether it is to take over the function of network controller.

2. A wireless ad hoc network as claimed in claim 1, **characterized in that** a terminal is provided for calculating a value, which is formed from the sum of all received field strengths of a terminal to its neighboring terminals divided by the number of neighboring terminals and **in that** the terminal having the lowest value is provided for taking over the function of network controller.

3. A wireless ad hoc network as claimed in claim 1, **characterized in that** a terminal is provided for calculating a value, which is formed from the sum of the traffic of useful data of a terminal to the neighboring terminals and **in that** the terminal having the highest value is provided for taking over the function of network controller.

4. A wireless ad hoc network as claimed in claim 1, **characterized in that** a plurality of sub-networks having each a terminal referred to as controller and executing the respective function of network controller of the sub-network, **in that** the sub-networks are provided via bridge terminals to exchange messages and data between the sub-networks, **in that** at least one terminal in a sub-network is provided for storing its own traffic ratios and the traffic ratios of the other sub-networks and **in that** the traffic ratios of each sub-network stored in a terminal are provided for establishing whether a change of the function of network controller from one terminal to another is necessary.

5. A wireless ad hoc network as claimed in claim 1, **characterized in that** after a change of the function of network controller from one terminal to another terminal the current terminal that has the function of network controller is provided for transferring control information to the actual terminal that has the function of network controller.

## Revendications

1. Réseau ad hoc sans fil avec plusieurs terminaux dont au moins un terminal est prévu à l'aide des relations de trafic enregistrées pour constater si un changement de la fonction de commande du réseau est nécessaire d'un terminal vers un autre terminal;
**caractérisé en ce**
**qu'**au moins un terminal est prévu pour l'enregistrement de relations de trafic mesurées à intervalles déterminés entre au moins une partie du terminal, la mesure des relations de trafic entre deux terminaux ne désignant ni la mesure de l'intensité de champ de réception, ni la mesure du trafic des donnés utiles entre deux terminaux;
**qu'**au moins le terminal désigné comme contrôleur est prévu avec la fonction de commande de réseau pour l'enregistrement des relations de trafic entre au moins une partie des terminaux sous la forme d'une matrice;
**que** le contrôleur est prévu pour la répartition de la matrice enregistrée sur tous les terminaux et
**qu'**un terminal est prévu à l'aide de la matrice pour déterminer s'il doit prendre en charge la fonction de contrôleur.

2. Réseau ad hoc sans fil selon la revendication 1
**caractérisé en ce**
**qu'**un terminal est prévu pour le calcul d'une valeur qui se compose de la somme de toutes les intensités de champ de réception d'un terminal pour ses terminaux voisins divisée par le nombre des terminaux voisins et
**que** le terminal avec la valeur minimale est prévu pour la prise en charge de la fonction de commande de réseau.

3. Réseau ad hoc sans fil selon la revendication 1,
**caractérisé en ce**
**qu'**un terminal est prévu pour le calcul d'une valeur qui se compose de la somme du trafic de données utiles d'un terminal avec le terminal voisin et que le terminal avec la valeur maximale est prévu pour la prise en charge de la fonction de commande de réseau.

4. Réseau ad hoc sans fil selon la revendication 1,
**caractérisé en ce**
**que** plusieurs sous-réseaux sont contenus avec, à chaque fois, un terminal exerçant la fonction respective de commande de réseau du sous-réseau et désigné comme contrôleur, que les sous-réseaux sont prévus par l'intermédiaire de terminaux de pont pour l'échange de messages et de données entre les sous-réseaux;
**qu'**au moins un terminal dans un sous-réseau est prévu pour l'enregistrement des relations de trafic respectives et des relations de trafic des autres sous-réseaux et
**que** les relations de trafic de chaque sous-réseau enregistrées dans un terminal sont prévues pour déterminer si un changement de la fonction de commande de réseau est nécessaire d'un terminal vers un autre terminal.

5. Réseau ad hoc sans fil selon la revendication 1,
**caractérisé en ce**
**qu'**après un changement de la fonction de commande de réseau d'un terminal vers un autre terminal, le terminal jusqu'à présent avec la fonction de commande de réseau est prévu pour la transmission d'informations de commande vers le nouveau terminal avec la fonction de commande de réseau.
